# EUROPEAN PATENT SPECIFICATION

(11) **EP 1 925 713 B1**
(45) Date of publication and mention of the grant of the patent: **06.01.2010**
(21) Application number: 06425798.3
(22) Date of filing: 24.11.2006
(51) Int. Cl.: D06F 58/24, D06F 58/10

(54) **Laundry drier with an additional controlled-temperature compartment for delicate laundry**
Wäschetrockner mit zusätzlicher Kammer mit Temperaturkontrolle für Feinwäsche
Séchoir à linge doté d'un compartiment supplémentaire à température contrôlée pour le linge délicat

(43) Date of publication of application: 28.05.2008
(73) Proprietor: Candy S.p.A., 20052 Monza (MI) (IT)
(72) Inventor: Fumagalli, Silvano, 20052 Monza (MI) (IT)
(74) Representative: Perani, Aurelio

(56) References cited:
- EP-A- 1 541 744
- EP-A- 1 591 579
- EP-A1- 1 408 151
- DE-A1-102005 053 702

## Description

The present invention relates to a laundry drying machine in which a flow of drying air is caused to circulate in a closed circuit comprising a motor fan adapted to cause the flow to move, a drum containing the laundry to be dried with an associated loading door in the closed position, a battery of heaters adapted to heat the flow of air, a condenser adapted to remove the moisture absorbed by the flow as it passes through the laundry disposed in the drum from the flow and in which a flow of cooling air of the condenser is conveyed in a duct provided with a first opening for air intake and a second opening for discharge, both openings communicating with the environment outside the laundry drying machine, a section which surrounds the condenser, means for regulating the rate of the flow passing through the duct and motor fan means for the generation and propagation of the flow in the duct.

In accordance with the prior art, it is noted that the heat contained in the flow of cooling air and taken from the flow of drying air at the condensation exchanger is largely dispersed as this cooling flow is dispersed into the environment outside the laundry drying machine with a consequent loss of energy.

Examples of the above mentioned prior art are shown in EP-A- 1 408 157 and DE-A-102005033702. In both documents, while a dedicated duct is provided for the circulation of the condenser cooling air and a fan is caused to operate for controlling the flow in that duct, the cooling air after having passed the condenser, is directed to an outlet which is open towards the outside of the machine.

An object of the present invention is therefore as far as possible to recover the energy content of the flow of the cooling air of the condenser and to improve the overall energy performance of the machine.

A further object of the invention is to provide the user with a laundry drying machine provided with a controlled-temperature compartment in which delicate or very delicate laundry, requiring no or very little ironing, can be dried.

These and other objects set out in further detail in the following description are achieved by the apparatus according to claim 1.

The characteristic features and advantages of the present invention are described in further detail in the following detailed description of practical embodiments, illustrated by way of non-limiting example with reference to the accompanying drawings, in which:
Fig. 1 is a diagrammatic view in perspective, partially in section, of a first embodiment of the laundry drying machine of the invention;
Fig. 2a is a vertical section through the machine of Fig. 1 along the line II-II of Fig. 1;
Fig. 2b is a view in partial cross section of the laundry support drawer of the machine according to the first embodiment of Fig. 1;
Fig. 3 is a diagrammatic view in perspective, partially in section, of a second embodiment of the of the laundry drying machine of the invention;
Fig. 4 is a partial view in vertical section of the machine of Fig. 3 along the line IV-IV of Fig. 3;
Fig. 5 is a view in cross section of the delicate laundry drying compartment along the line V-V of Fig. 4.

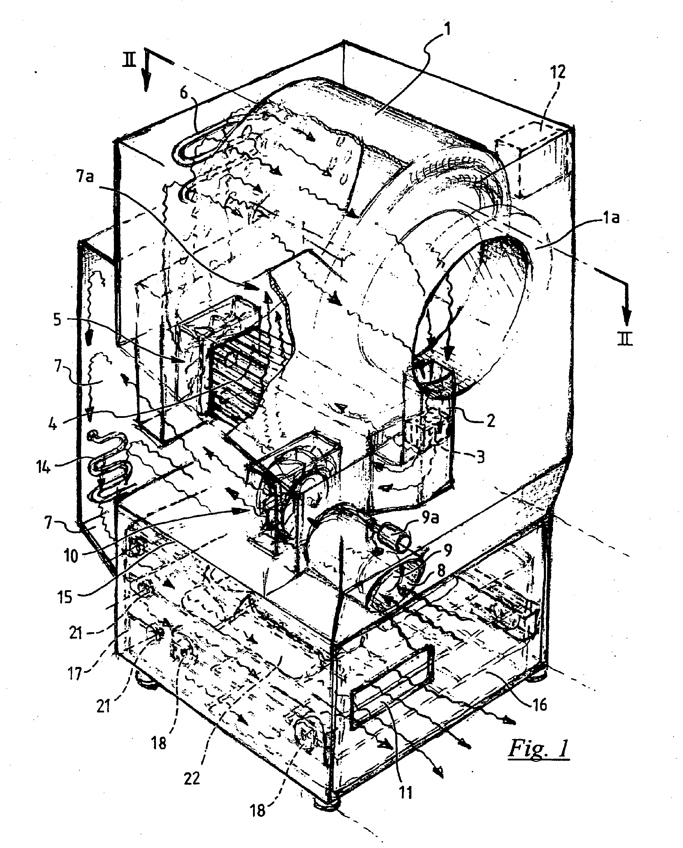

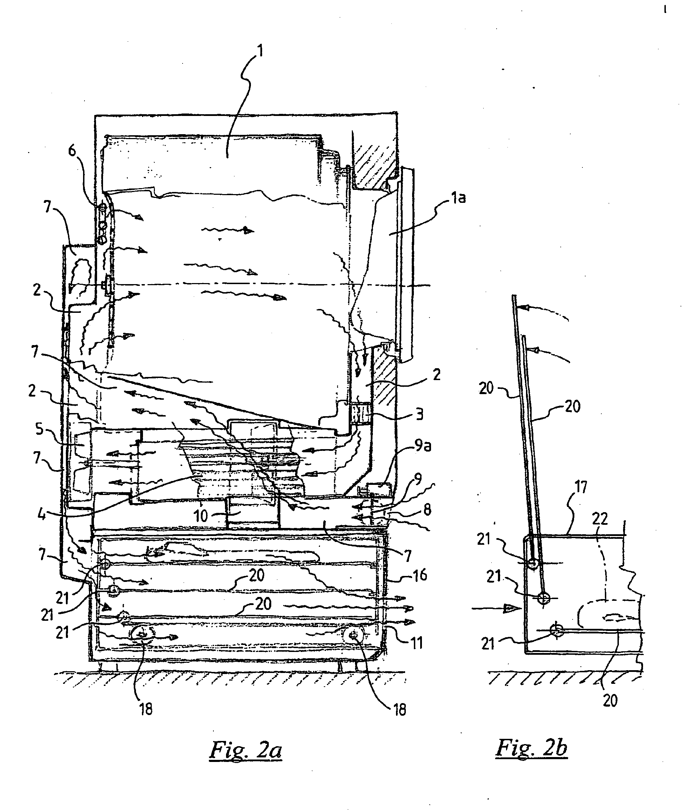

With reference to Figs. 1, 2a and 2b, the drum of a laundry drying machine, which may be of the static or rotary type, is shown overall by 1. The drum 1 is conventionally provided with a door 1a through which the laundry to be dried can be loaded and which can be hermetically closed during operation of the machine.

The drum 1 is disposed in a closed circuit formed by the duct sections 2 for the drying air which comprises a conventional filter 3, a heat exchanger 4 of the air/air type which is adapted to condense the moisture conveyed by the flow of drying air, a motor fan 5 adapted to circulate the flow of air in the circuit, and a heater 6 of conventional type with electrical resistors disposed, for instance, immediately upstream of the drum 1 (Fig. 2a).

The laundry drying machine of the invention comprises a further dedicated circuit, formed by duct sections 7, for the flow of cooling air. This further circuit is provided with an opening 8 through which air is taken from the environment surrounding the laundry drying machine, a control member formed, for instance, by a valve 9, which may be actuated by a servo-mechanism 9a, for closing and opening the opening 8 and thus regulating the rate of flow. The circuit is further provided with a motor fan 10 for the generation and propagation of the flow in the ducts 7 and an opening 11 through which the air is again discharged into the environment surrounding the machine.

The circuit formed by the ducts 7 conventionally passes, via a section 7a thereof, through the condensation exchanger 4 so that the outer heat exchange surface thereof is impacted by the flow of cooling air.

The condensed liquid which is formed in the condenser 4 following cooling conventionally flows into a collection tank (not shown).

Although the valve 9 for regulating the flow of cooling air is shown disposed between the intake opening 8 and the motor fan 10 in Fig. 1, it could as an alternative be disposed in another position along the circuit formed by the ducts 7.

The apparatus of the invention lastly comprises an electronic programming and control unit 12 which is adapted to adjust the valve 9 to various open positions between the closed position and the fully open position as a function of an operating program contained therein and stored in a memory and also as a function of the temperature values and levels of moisture of the drying air detected by a conventional sensor (not shown) disposed on a duct section 2, for instance at the output of the exchanger 4.

This programming and control unit 12 may also control the actuation, stoppage and speed of the motor fan 10, as an alternative to the control valve 9, or both.

This programming and control unit 12 is adapted, moreover, to manage the regulation of the heater 6 in order to supply the flow of drying air with the heat that it may need for correct operation.

It will be appreciated from what has been described above that it is possible, during operation of the apparatus, to modulate the flow of cooling air directed to the exchanger 4, firstly because this flow is channelled in the circuit formed by the ducts 7, 7a, and secondly because the rate of this channelled flow may be adjusted by causing the servo-mechanism 9a to act on the control valve 9 by means of the programming and control unit 12.

The modulation of the flow of cooling air carried out at appropriate times of the machine cycle means that the quantity of heat which may be taken from the drying flow in the exchanger 4 can be adjusted.

In particular, when operation of the machine is started and the drying air in the drum 1 and in the circuit associated therewith has to be brought from ambient temperature to the required temperature and therefore heat has to be provided by the heater 6, the programming and control unit 12 closes the valve 9 preventing cooling air from reaching the exchange surface of the condenser 4 thereby preventing any unwarranted removal of heat while heating is in progress.

As an alternative, the flow of cooling air may be interrupted by stopping the operation of the motor fan 10.

As soon as the flow of drying air has reached the optimum temperature for beginning drying with the removal of moisture, the control unit 12 actuates the flow of cooling air on the condensation exchanger 4 and also regulates its rate of flow by adjusting the valve 9.

As the cooling of the flow of drying air causes the temperature of the flow of cooling air to increase, this latter flow may, in accordance with the invention, be conveyed through an additional compartment, shown by 13 in the embodiment of Fig. 1, before being discharged through the discharge opening 11. Delicate or very delicate laundry items not requiring particular ironing operations are disposed for drying in this compartment.

An additional heater 14, also managed by the programming and control unit 12, is positioned in a duct section 7, upstream of the compartment 13, in order to carry out any additional heating of the flow and regulation of its temperature, detected by means of a conventional sensor (not shown), before it enters the compartment 13.

In this way, the heat removed from the flow of drying air in order to reduce its temperature and cause the moisture to condense in accordance with the known Mollier moist air diagram is partially re-used to condition the additional compartment 13 for drying delicate or very delicate laundry not requiring particular ironing operations.

In accordance with the embodiment of Figs. 1 and 2a, the additional compartment 13 is disposed below the base plane 15 of the laundry drying machine and is provided with a door 16 which may be opened from the front part of the machine.

A drawer 17 is disposed inside the compartment 13 and may slide, for instance by means of rollers 18, with respect to the base plane 19 (Fig. 2a) of the compartment 13.

The drawer 17 is provided with a plurality of shelves 20 in grid form disposed parallel to the base 19 of the compartment and rotating about respective pins 21 such that when the drawer is extracted from the compartment 13, they may be raised, as shown in Fig. 2b, to allow laundry items 22 to be supported in superimposed and spaced layers, as shown diagrammatically in the drawings.

The laundry items 22 are preferably positioned in a folded state such that, when drying is complete, they are in practice ready for use without the need for further ironing operations as a result of the flow of temperate air passing through them when they are being dried.

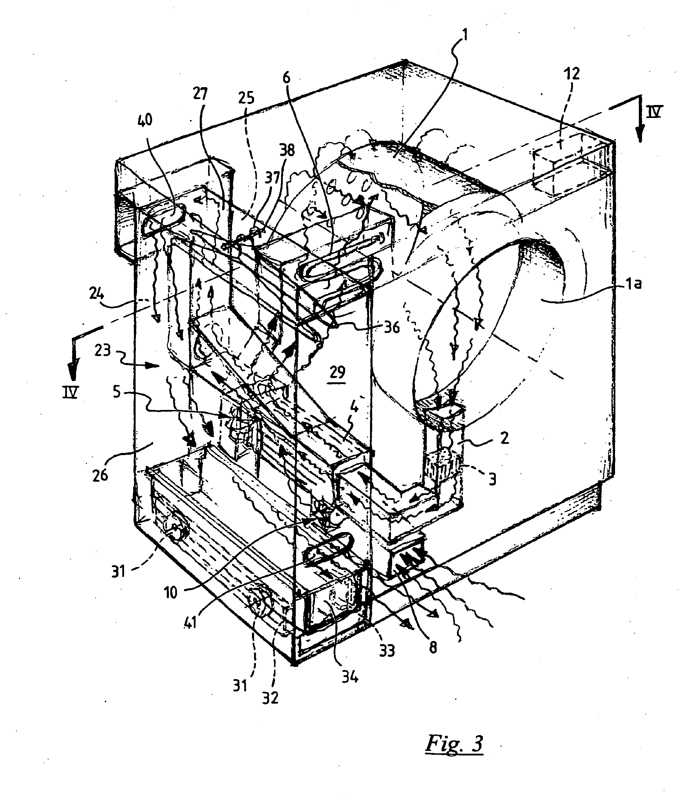

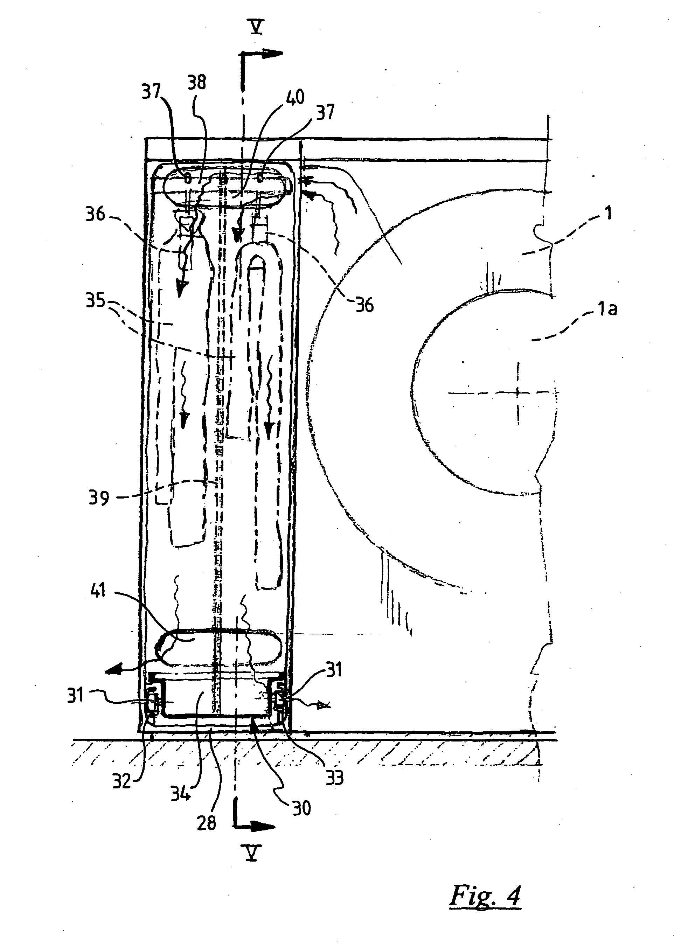

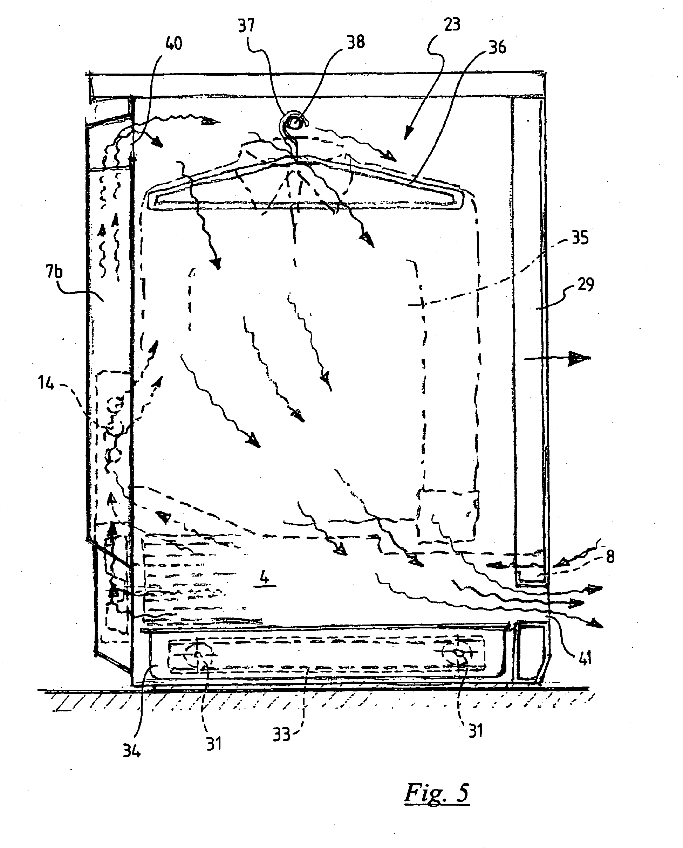

In accordance with a second embodiment, shown in Figs. 3, 4 and 5, the laundry drying machine is provided with an additional compartment 23 disposed vertically on one side of the laundry drying machine.

The general characteristic features of the circuit of the drying flow and the circuit of the cooling flow of the condenser already described with reference to the first embodiment of Figs. 1, 2a and 2b remaining the same, with the result that the same reference numerals have been used for equivalent members, the additional compartment 23 is provided with a vertical base wall 24, vertical lateral walls 25 and 26, a horizontal upper wall 27 and a horizontal base 28. The front side of the compartment is formed by the vertical wall 29 of a sliding carriage structure 30 which, when inserted in the compartment 23, bounds its front part and closes it.

The carriage structure 30 may slide on rollers 31 which are borne on horizontal guides 32 and 33 fixedly joined to the base 28 of the compartment 23. This carriage structure 30 forms a tank 34 in which the water which may drip from the laundry items 35 being dried in the compartment 23 is collected.

These laundry items are disposed on respective hangers 36 which are, in turn, suspended by means of their hook 37 from a horizontal rod 38 borne by a column structure 39 which rises vertically from the carriage structure 30.

The vertical base wall 24 of the compartment 23 is provided with an opening 40 which is reached, via the section 7b of the duct 7, by the flow of temperate air from the condenser 4 of the laundry drying machine and directed into the compartment, possibly heated by the heater 14 (Fig. 1).

In order to discharge this flow from the compartment 23 to the external environment, the wall 29 of the carriage structure 30 is provided with an opening 41 which, when the wall 29 is in the position closing the compartment 23, has the same function as the opening 11 (Fig. 1) of the first embodiment of Figs. 1, 2a and 2b.

As an alternative to the positions described above for the additional compartments 13 and 23, respectively below and at the side of the laundry drying machine, these compartments may be designed as independent structures separate from the laundry drying machine to which they are connected by tubes, for instance flexible tubes, which extend the circuit of the ducts 7 in order to supply the flow of temperate air from the condenser 4.

It will be appreciated from the above that the laundry drying machine of the invention, in its possible variants, makes it possible to achieve substantial energy savings by re-using part of the heat content of the cooling flow and to carry out a particular type of drying for delicate or very delicate laundry items in additional dedicated compartments.

It will be appreciated that variants other than those described and illustrated may be made by a person skilled in the art without thereby departing from the scope of the present invention as set out in the accompanying claims.

## Claims

1. A laundry drying machine in which a flow of drying air is caused to circulate in a closed circuit comprising a motor fan (5) adapted to move this flow, a drum (1) containing the laundry to be dried with an associated loading door in the closed position, a battery (6) of heaters adapted to heat the flow of air and a condenser (4) adapted to remove the moisture absorbed by the flow as it passes through the laundry disposed in the drum (1) from the flow and in which a flow of cooling air of the condenser (4) is conveyed in a duct (7) provided with a first opening (8) for air intake and a second opening (11) for discharge, both openings communicating with the environment outside the laundry drying machine, a section (7a) which surrounds the condenser (4), means (9) for regulating the rate of the flow passing through the duct (7) and motor fan means (10) for the generation and propagation of the flow in the duct (7), **characterised in that** it comprises at least one additional drying compartment (13, 23) which is inserted in the circuit of the flow of cooling air of the condenser (4) in the section between the condenser (4) and the discharge opening (11,41) to the environment outside the machine.

2. A laundry drying machine according to claim 1, **characterised in that** it comprises additional means (14) for heating the flow of cooling air of the condenser (4), these additional heating means (14) being positioned in the duct (7) upstream of the additional drying compartment (13, 23).

3. A laundry drying machine according to claim 2, **characterised in that** it comprises a programming and control unit (12) adapted to control at least the means (9, 9a) for regulating the flow of cooling air of the condenser (4) and the additional heating means (14).

4. A laundry drying machine according to claim 3, **characterised in that** the additional compartment (13) is disposed below the machine.

5. A laundry drying machine according to claim 4, **characterised in that** the additional compartment (13) internally comprises a drawer (17) which may be removed and is provided with at least one shelf (20) on which laundry items (22) to be dried may be disposed.

6. A laundry drying machine according to claim 5, **characterised in that** the removable drawer (17) comprises a plurality of shelves (20) on which laundry items (22) may be disposed and supported, these shelves being superimposed and spaced from one another and being mutually removable at least partially from the drawer (17).

7. A laundry drying machine according to claim 6, **characterised in that** the shelves (20) are hinged on one wall of the drawer (17) along one of their sides and may be raised with respect to the drawer (17).

8. A laundry drying machine according to claim 3, **characterised in that** the additional compartment (23) is disposed at the location of a lateral vertical wall of the machine.

9. A laundry drying machine according to claim 8, **characterised in that** the additional compartment (23) comprises a removable carriage (30) provided with a support structure (39) for a plurality of hangers (36) bering laundry items (35), this carriage (30) being provided with a wall (29) which, when the carriage is inserted in the compartment (23), is adapted to close the latter.

10. A laundry drying machine according to claim 3, **characterised in that** the additional drying compartment (13, 23) is formed by a structure independent and separate from the machine, connecting tubes being provided for the supply of the flow of temperate air from the cooling of the condenser (4) of the machine.

## Patentansprüche

1. Wäschetrockner, in welchem ein Strom von Trocknungsluft in einem geschlossenen Kreislauf in Umlauf gesetzt wird, umfassend einen Ventilatormotor (5), der dazu ausgebildet ist, um den Strom zu bewegen, eine Trommel (1), die, bei geschlossener Position einer zugehörigen Beladungstür, die zu trocknende Wäsche enthält, eine Gruppe (6) von Heizelementen, die dazu ausgebildet sind, den Luftstrom zu erwärmen, und einen Kondensator (4), der dazu ausgebildet ist, aus dem Strom die von dem Strom beim Durchströmen der in der Trommel (1) angeordneten Wäsche aufgenommene Feuchtigkeit zu entfernen, und in welchem ein Strom von Kühlungsluft des Kondensators (4) in einer Leitung (7) befördert wird, die ausgestattet ist mit einer ersten Öffnung (8) zum Ansaugen von Luft und einer zweiten Öffnung (11) zum Ausblasen, wobei beide öffnungen mit der Umgebung außerhalb des Wäschetrockners in Verbindung stehen, einem Abschnitt (7a), welcher den Kondensator (4) umgibt, Mitteln (9) zum Regeln der Rate des Stroms durch die Leitung (7) und Ventilatormotormitteln (10) zur Erzeugung und Weiterleitung des Stroms in der Leitung (7), **dadurch gekennzeichnet, daß** er mindestens eine zusätzliche Trocknungskammer (13, 23) umfaßt, welche in den Kreislauf des Stroms von Kühlungsluft des Kondensators (4) in dem Abschnitt zwischen dem Kondensator (4) und der Ausblasöffnung (11, 41) zur Umgebung außerhalb der Maschine eingefügt ist.

2. Wäschetrockner nach Anspruch 1, **dadurch gekennzeichnet, daß** er zusätzliche Mittel (14) zum Erwärmen des Stroms von Kühlungsluft des Kondensators (4) umfaßt, wobei die zusätzlichen Heizmittel (14) in der Leitung (7) stromaufwärts der zusätzlichen Trocknungskammer (13, 23) angeordnet sind.

3. Wäschetrockner nach Anspruch 2, **dadurch gekennzeichnet, daß** er eine Programmier- und Steuereinheit (12) umfaßt, die dazu ausgebildet ist, zumindest die Mittel (9, 9a) zum Regeln des Flusses von Kühlungsluft des Kondensators (4) und die zusätzlichen Heizmittel (14) zu steuern.

4. Wäschetrockner nach Anspruch 3, **dadurch gekennzeichnet, daß** die zusätzliche Kammer (13) unterhalb des Wäschetrockners angeordnet ist.

5. Wäschetrockner nach Anspruch 4, **dadurch gekennzeichnet, daß** die zusätzliche Kammer (13) im Inneren einen Schubkasten (17) enthält, welcher entfernt werden kann und mit wenigstens einer Ablagefläche (20) versehen ist, auf welcher zu trocknende Wäscheartikel (22) angeordnet werden können.

6. Wäschetrockner nach Anspruch 5, **dadurch gekennzeichnet, daß** der entfernbare Schubkasten (17) eine Mehrzahl von Ablageflächen (20) umfaßt, auf welchen Wäscheartikel (22) angeordnet und aufgenommen werden können, wobei die Auflageflächen übereinander angeordnet und voneinander beabstandet sind und wechselseitig jeweils vom Schubkasten (17) mindestens partiell entfernbar sind.

7. Wäschetrockner nach Anspruch 6, **dadurch gekennzeichnet, daß** die Ablageflächen (20) an einer Wand des Schubkastens (17) entlang einer ihrer Seiten angelenkt sind und bezüglich des Schubkastens (17) hochgeklappt werden können.

8. Wäschetrockner nach Anspruch 3, **dadurch gekennzeichnet, daß** die zusätzliche Kammer (23) am Ort einer seitlichen vertikalen Wand des Wäschetrockners angeordnet ist.

9. Wäschetrockner nach Anspruch 8, **dadurch gekennzeichnet, daß** die zusätzliche Kammer (23) einen entfernbaren Wagen (30) umfaßt, welcher mit einer Tragstruktur (39) für eine Mehrzahl von Wäscheartikel (35) tragenden Hängevorrichtungen (36) ausgestattet ist, wobei der Wagen (30) mit einer Wand (29) ausgestattet ist, welche dazu ausgebildet ist, wenn der Wagen in die Kammer (23) eingesetzt ist, letztere zu schließen.

10. Wäschetrockner nach Anspruch 3, **dadurch gekennzeichnet, daß** die zusätzliche Trocknungskammer (13, 23) durch eine von dem Wäschetrockner unabhängige und separate Struktur gebildet ist, wobei Verbindungsleitungen für die Zufuhr des Stroms temperierter Luft aus der Kühlung des Kondensators (4) des Wäschetrockners vorgesehen sind.

## Revendications

1. Sèche-linge dans lequel un courant d'air de séchage est mis en circulation dans un circuit fermé, comprenant un moteur ventilateur (5) conçu pour déplacer ledit courant, un tambour (1) qui, en position fermée d'une porte associée de chargement, contient le linge à sécher, un groupe (6) d'éléments de chauffage conçus pour chauffer le courant d'air, ainsi qu'un condenseur (4) conçu pour enlever du courant l'humidité absorbée par le courant en traversant le linge disposé dans ledit tambour (1), et dans lequel un courant d'air de refroidissement du condenseur (4) est transporté dans une conduite (7) qui est pourvue d'une première ouverture (8) d'aspiration d'air et d'une seconde ouverture (11) d'évacuation, les deux ouvertures communiquant avec l'environnement à l'extérieur du sèche-linge, d'une section (7a) qui entoure ledit condenseur (4), de moyens (9) de réglage du taux du courant passant à travers la conduite (7) ainsi que de moyens de moteur ventilateur (10) pour la génération et l'acheminement du courant dans la conduite (7), **caractérisé par le fait qu'**il comprend au moins un compartiment supplémentaire de séchage (13, 23) qui est inséré dans le circuit du courant d'air de refroidissement du condenseur (4) dans la section entre le condenseur (4) et ladite ouverture d'évacuation (11, 41) vers l'environnement à l'extérieur de la machine.

2. Sèche-linge selon la revendication 1, **caractérisé par le fait qu'**il comprend des moyens supplémentaires (14) de chauffage du courant d'air de refroidissement du condenseur (4), lesdits moyens supplémentaires de chauffage (14) étant disposés dans la conduite (7) en amont du compartiment supplémentaire de séchage (13, 23).

3. Sèche-linge selon la revendication 2, **caractérisé par le fait qu'**il comprend une unité de programmation et de commande (12) adapté pour commander au moins les moyens (9, 9a) de réglage du courant d'air de refroidissement du condenseur (4) et les moyens supplémentaires de chauffage (14).

4. Sèche-linge selon la revendication 3, **caractérisé par le fait que** ledit compartiment supplémentaire (13) est disposé au-dessous du sèche-linge.

5. Sèche-linge selon la revendication 4, **caractérisé par le fait que** ledit compartiment supplémentaire (13) comprend intérieurement un tiroir (17) qui peut être retiré et qui est pourvu d'au moins une surface de réception (20) sur laquelle peuvent être disposés des articles de linge (22) à sécher.

6. Sèche-linge selon la revendication 5, **caractérisé par le fait que** ledit tiroir (17) apte à être retiré comprend une pluralité de surfaces de réception (20) sur lesquelles peuvent être disposés et reçus des articles de linge (22), lesdites surfaces de réception étant superposées et espacées les unes des autres et pouvant être retirées mutuellement au moins en partie du tiroir (17).

7. Sèche-linge selon la revendication 6, **caractérisé par le fait que** lesdites surfaces de réception (20) sont articulées sur une paroi du tiroir (17) suivant l'un de leurs côtés et peuvent être relevées par rapport au tiroir (17).

8. Sèche-linge selon la revendication 3, **caractérisé par le fait que** ledit compartiment supplémentaire (23) est disposé à un endroit d'une paroi latérale verticale du sèche-linge.

9. Sèche-linge selon la revendication 8, **caractérisé par le fait que** le compartiment supplémentaire (23) comprend un chariot (30) retirable qui est muni d'une structure porteuse (39) pour une pluralité de dispositifs de suspension (36) portant des articles de linge (35), ledit chariot (30) étant pourvu d'une paroi (29) qui, lorsque le chariot est inséré dans le compartiment (23), est adapté pour fermer ce dernier.

10. Sèche-linge selon la revendication 3, **caractérisé par le fait que** ledit compartiment supplémentaire de séchage (13, 23) est formé par une structure indépendante et séparée du sèche-linge, des conduites de connexion étant prévues pour l'amenée du courant d'air tempéré provenant du refroidissement du condenseur (4) du sèche-linge.
